(19) Europäisches Patentamt
European Patent Office
Office européen des brevets

(11) **EP 4 769 922 A1**

(12) **EUROPEAN PATENT APPLICATION**

(43) Date of publication:
**01.07.2026 Bulletin 2026/27**

(21) Application number: **25215522.1**

(22) Date of filing: **13.11.2025**

(51) International Patent Classification (IPC):
**H02M 1/32** (2007.01)    **H02M 3/158** (2006.01)
**H02M 1/34** (2007.01)

(52) Cooperative Patent Classification (CPC):
**H02M 1/32; H02M 1/346; H02M 3/158**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.12.2024 US 202419003378**

(71) Applicant: **INTEL Corporation**
**Santa Clara, CA 95054 (US)**

(72) Inventors:
• JAIN, Amit
  Sherwood (US)
• PANG, Sze Geat
  Gelugor (MY)
• RESCH, Joshua
  Portland, 97229 (US)
• MASON ORTIZ, Marva
  Heredia (CR)

(74) Representative: **Viering, Jentschura & Partner mbB**
**Patent- und Rechtsanwälte**
**Am Brauhaus 8**
**01099 Dresden (DE)**

(54) **VOLTAGE OVERSHOOT MITIGATION**

(57)    Embodiments herein relate to a voltage converter which can mitigate a voltage overshoot in an energy efficient and space-efficient manner. In one aspect, energy from an inductor is diverted away from the output and recycled from the output capacitance to the input of the voltage converter. Different implementations includes an augmented buck-boost converter, a switched-coupled-inductor buck converter, a buck-reverse-flyback hybrid converter, and an inductive shunt and recovery circuit.

Fig. 4

**Description**

BACKGROUND

Computing devices often rely on voltage converters, also referred to as voltage regulators, to obtain power. For example, direct current (DC)-to-DC voltage converters can convert a power supply at one DC voltage to another, higher or lower DC voltage. Examples of voltage converters include buck, boost and buck-boost converters. For example, a voltage converter can convert the main supply voltage of a computing device, such as 12 V, down to lower voltages, such as 5 V, 3.3 V or 1.8 V. The lower voltages can be used by various components in the computing device, such as a Universal Serial Bus (USB) interface, memory such as dynamic random access memory (DRAM) and processing resources such as a central processing unit (CPU). However, it is challenging to supply power in an efficient and costeffective manner.

BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.

FIG. 1 depicts an example buck converter 100, in accordance with various embodiments.
FIG. 2 depicts an example power plane 200 in the voltage converter 100 of FIG. 1, in accordance with various embodiments.
FIG. 3 depicts plots of voltage and current versus time in the voltage converter 100 of FIG. 1 during a voltage overshoot, in accordance with various embodiments.
FIG. 4 depicts an example buck-boost converter 400 including a current path during a voltage overshoot, in accordance with various embodiments.
FIG. 5 depicts an example augmented buck converter 500 to recycle inductor and capacitor energy during a voltage overshoot, in accordance with various embodiments.
FIG. 6A depicts an example switched-coupled-inductor buck converter 500 to recycle inductor and capacitor energy during a voltage overshoot, in accordance with various embodiments.
FIG. 6B depicts an equivalent circuit of the switched-coupled-inductor buck converter 600 of FIG. 6A during a part of a voltage overshoot in which an output current iout continues to charge an output capacitor Cout, in accordance with various embodiments.
FIG. 6C depicts an equivalent circuit of the buck converter 500 of FIG. 5 during a part of a voltage overshoot in which iout no longer charges Cout, in accordance with various embodiments.
FIG. 7 depicts an example buck-reverse-flyback hybrid converter 700 to recycle inductor and capacitor energy during a voltage overshoot, in accordance with various embodiments.
FIG. 8A depicts an example buck converter 800 having an inductive shunt and recovery circuit 810, in accordance with various embodiments.
FIG. 8B depicts an equivalent circuit of the buck converter 800 of FIG. 8A during a part of a voltage overshoot in which Sa1, Sa2 and S2 are on, in accordance with various embodiments.
FIG. 8C depicts an equivalent circuit of the buck converter 800 of FIG. 8A during a part of a voltage overshoot in which Sa2 is on and Da2 conducts, in accordance with various embodiments.
FIG. 8D depicts an equivalent circuit of the buck converter 800 of FIG. 8A during a part of a voltage overshoot in which Da1 and Da2 conduct, in accordance with various embodiments.
FIG. 9 depicts a state diagram for controlling the buck converter 800 of FIG. 8A, in accordance with various embodiments.
FIG. 10 depicts plots consistent with a voltage overshoot in the buck converter 800 of FIG. 8A, in accordance with various embodiments.
FIG. 11 depicts another example buck converter 1100 having an inductive shunt and recovery circuit 1110, in accordance with various embodiments.
FIG. 12 illustrates an example of components that may be present in a computing system 1250 for implementing the techniques (e.g., operations, processes, methods, and methodologies) described herein.

DETAILED DESCRIPTION

As mentioned at the outset, various challenges are encountered in designing voltage converters.
One challenge is handling a voltage overshoot condition which can occur at the output node of the voltage converter. An overshoot can occur, e.g., when the load such as a processor suddenly decreases its current consumption.

Generally, in a high-performance computing system that has tight constraints on size, a voltage overshoot, or voltage excursion above operating limits, can occur at the point of load. The conditions for this can include using a buck (switching) voltage regulator on the power rail, a tight voltage tolerance, a high current step (di/dt), a high resistive path from the voltage regulator to the load, and/or insufficient space to place enough capacitors next to the load. All these conditions are present in the resource constrained "core region" (e.g., the immediate proximity of the microprocessor) of mobile and desktop platforms, for instance.

One potential overshoot mitigation technique uses a switched bleeder resistor, where a resistance is switched in parallel with the load to dissipate energy upon detection of overshoot. However, with this technique, all excess energy in the output capacitance is dissipated.

Another potential solution uses a direct current load line (DCLL) or an advanced voltage positioning (AVP) logic programmed into the voltage regulator (VR). In this case, the VR actively reduces the output voltage as the current increases by DCLL*I. The lowered voltage at high current provides a larger headroom to the overshoot voltage limit. However, the VR cost increases significantly and it cannot account for voltage across the path resistance.

Also, these solutions do not address the buck converter inductor energy, where the inductor continues to feed the output node even after overshoot is detected. These solutions are incompatible with the system constraints present in modern densely packed power delivery system where there is a high premium on energy efficiency.

The solutions provided herein address the above and other disadvantages. In one aspect, due to the limited space to place devices near the point of load, the circuits proposed herein to mitigate a voltage overshoot can be placed where there is more room available, away from the microprocessor.

The solutions include circuits and control mechanisms to mitigate a voltage overshoot experienced due to the combined effects of fast current reduction at the load and large path resistance. The solutions divert buck converter inductor energy away from the output node and actively recycle energy from the output capacitance, either in sequence or simultaneously. These distinctions address both voltage across the path resistance and the energy penalty of other solutions.

In one aspect, the operation of a buck-boost converter is modified by turning on the low-side switches to divert the inductor energy away from the output node during an overshoot event.

In another aspect, a buck-boost converter adds a switch and reverses the polarity of an existing switch in the converter to divert inductor energy to the input node during an overshoot event.

In another aspect, a buck converter circuit includes a switched-coupled inductor, where an additional current path on the auxiliary winding of the inductor is switched on to divert the inductor energy away from the output node during an overshoot event.

In another aspect, a hybrid of a buck converter and a flyback converter is provided which adds a current path on the auxiliary winding of the inductor that first recycles inductor energy to the input node, and then recycles the output capacitor energy to the input node during an overshoot event.

In another aspect, the operation of a buck converter is modified with the addition of an inductive shunt and recovery circuit. The shunt circuit simultaneously transfers the buck inductor energy and the output capacitor energy into another inductor during an overshoot event and then recycles it back to the output node after the event has passed.

In another aspect, the operation of a buck converter is modified with the addition of an inductive shunt and recovery circuit that recycles inductor and output capacitor energy back to the input node.

The solutions provide a number of advantages, including allowing designers to build high performance dense platforms with circuits added away from the microprocessor and increased battery run times due to reduced capacitance requirements and energy recycling at load reduction events.

These and other features will be further apparent in view of the following discussion.

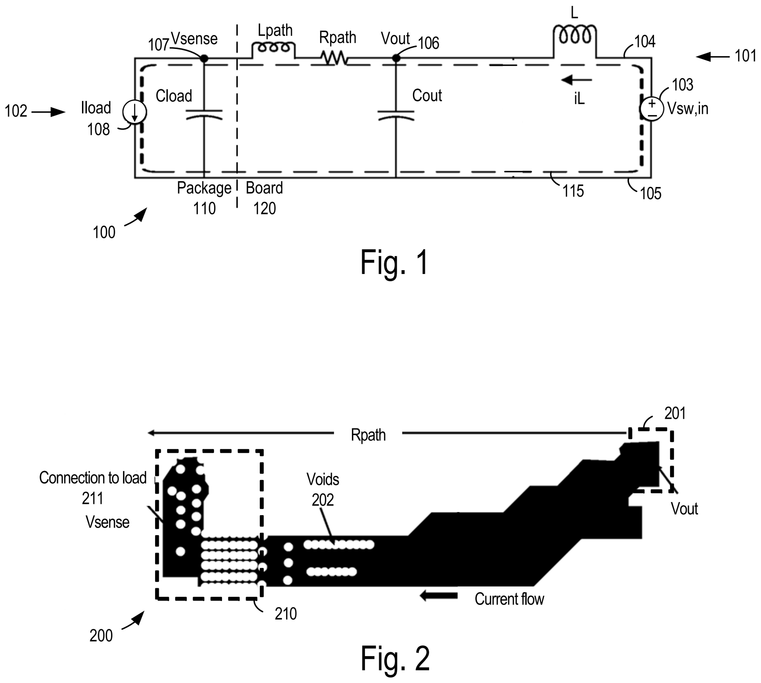

FIG. 1 depicts an example buck converter 100, in accordance with various embodiments. One portion of the converter can be in a package 110, e.g., the load and Cload, while another portion is on a board 120, e.g., a printed circuit board (PCB). The majority of the converter can advantageously be located outside the package to save space in the package. The circuit includes an input node 101 and an output node 102. The input node includes a DC voltage source 103 representing Vsw,in, the buck regulator switching voltage. The circuit includes a top voltage rail 104 (a power rail) and a bottom voltage rail 105 (a ground rail). The power rail include an inductor L, a node 106 at Vout, a path inductance Lpath and a sense node 107 at Vsense, a sense voltage.

On the board 120, a capacitor Cout is coupled between the rails. In the package 110, a capacitor Cload is coupled between the rails. The load 108 is represented by a current consumption of Iload. The load can be a processor, e.g., a central processing unit (CPU), or other circuit. Vsense or Vload (load voltage) is the voltage at (or very near to) the load which can be monitored by a buck regulator to regulate the output voltage relative to a target voltage. A current path 115 is generated during an overshoot of the output voltage, as discussed below.

During operation, the inductor L in the buck converter 100 (FIG. 1) becomes energized and the voltage Vout is produced. Current travels from Vout across the printed circuit board and to a voltage sense point, Vsense, on the integrated circuit package. Along the way, the current experiences the resistive path and inductance of the board and package, denoted Rpath and Lpath respectively, which will lower the voltage at Vsense compared to Vout whenever Iload > 0.

Vsw,in can be provided by a powertrain which includes a high-side switch/transistor in series with a low-side switch/transistor. Vout can be regulated at a target level by adjusting the duty cycle of the high-side transistor.

FIG. 2 depicts an example power plane 200 in the voltage converter 100 of FIG. 1, in accordance with various embodiments. The power plane is a layer or section of a PCB dedicated to distributing regulated power to various components in a system. The power plane may be a metal. The power plane includes a VR inductor pad 201, where the VR output, Vout, is provided. A number of voids 202 may be present. A region 210 includes CPU package pins and an area 211 with a connection to the load, at Vsense. A current flow direction is also depicted. Rpath denotes a path resistance of the power plane.

Many other power planes and signals are competing for space on the board which constrains the plane's shape. Rpath is higher than desired due to the voids created by high speed signal routing and the narrowing width of the plane near the CPU package.

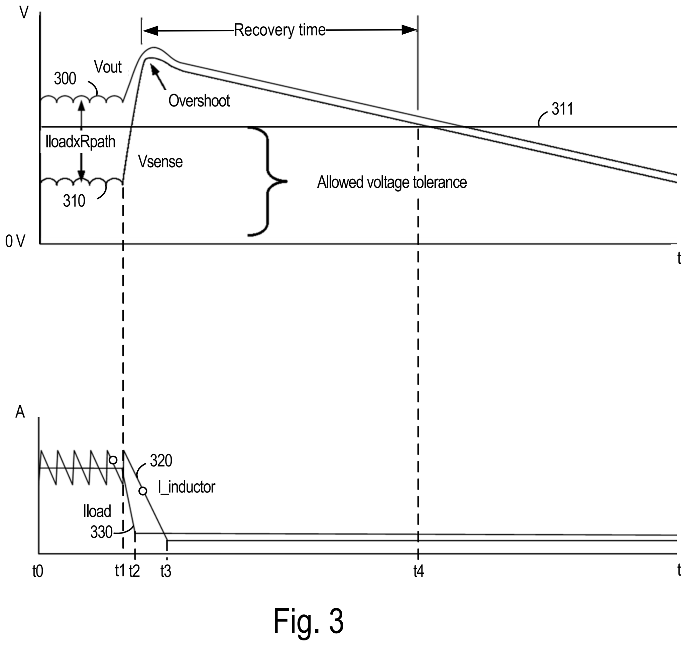

The voltage at Vsense is lower than at Vout by: Vsense = Vout - (Iload × Rpath). In steady state-where Iload is constant-Rpath does not pose much of a problem. However, if there is a fast release of the load-where Iload reduces quickly-Vsense will approach Vout (see FIG. 3). Furthermore, even after the buck converter reacts by turning off its high side FET, the inductor continues to feed energy to the output node. This can result in a voltage overshoot, or excursion beyond the allowed voltage tolerance, at Vsense and at the load.

FIG. 3 depicts plots of voltage and current versus time in the voltage converter 100 of FIG. 1 during a voltage overshoot, in accordance with various embodiments. A plot 300 denotes Vout, and a plot 310 denotes Vsense. A plot 320 depicts I_inductor, a current through the inductor L, and a plot 330 depicts Iload. During a time period t0-t1, the output voltage is regulated closely to a target level according to Iload. The periodic fluctuations are due to the on-off switching of the powertrain.

However, at t1-t2, Iload drops quickly, resulting in an overshoot of Vout and Vsense, relative to a threshold (line 311). I_inductor decreases with Iload, and stabilizes at t3.

A difference between Vout and Vsense from t0-t1 is equal to IloadxRpath. A recovery time for Vout and Vsense which extends to t4 is also depicted. The line 311 also defines an allowed voltage tolerance for Vsense.

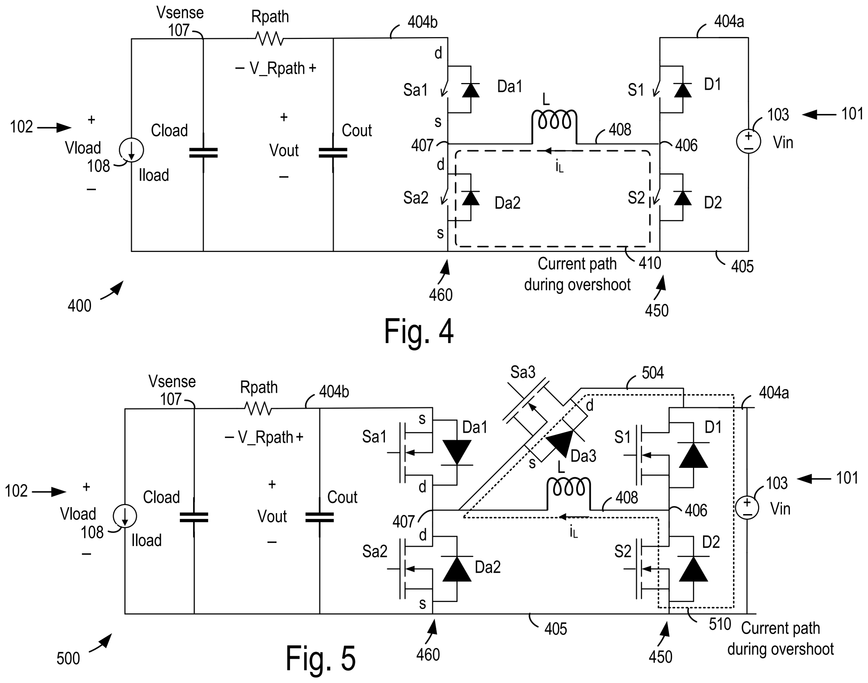

FIG. 4 depicts an example buck-boost converter 400 including a current path during a voltage overshoot, in accordance with various embodiments. The converter includes first and second portions 404a and 404b, respectively, of a power rail, and a ground rail 405. Switches S1, S2, Sa1 and Sa2 are depicted. Sa1 is a first switch and Sa2 is a second in the series path 460. Each switch can be a transistor such as a metal-oxide-semiconductor field-effect transistor (MOSFET), for example. The switches can be n-type MOSFETs in one possible implementation. Each transistor also has a body diode, which is a parasitic diode formed between a source and drain due to MOSFET's structure. For example, diodes D1, D2, Da1 and Da2 are associated with switches S1, S2, Sa1 and Sa2, respectively. S1 and S2 are in a first series path 450 coupled to the rails, and Sa1 and Sa2 are in a second series path 460 coupled to the rails.

The power rail 404b includes Rpath, which has a voltage drop of V_Rpath. Cload and Cout are also coupled between the rails. A first inductor L is in an first inductive path 408 which is coupled between a node 406, between S1 and S2, and a node 406, between Sa1 and Sa2. A current path 410 is formed during a voltage overshoot. The current path is a closed circuit so that the inductor is considered to be freewheeling, e.g., its current travel continuously in the closed circuit.

During normal operation (with no overshoot) in buck mode, Sa1 is kept ON (conductive), Sa2 is kept OFF (non-conductive) while S1 and S2 switch per the duty cycle needed to regulate the output voltage. S1 and S2 are high-side and low-side switches, respectively.

In case of a load decrease and potential voltage overshoot condition (where a controller determines that Vload > Vth, a predetermined threshold voltage), switches Sa1 and S1 are turned off while S2 and S2a are turned ON, providing the path 410 for the inductor current, thus advantageously avoiding transfer of inductor energy to the output node and increase of Vout and Vload. Thus, both energy savings and a reduction in the overshoot are achieved.

This condition can be maintained as long as the overshoot lasts. The operation reverts to normal buck operation when Vload < Vth. The inductor will retain some of its original energy depending on the total resistance in the path (L, Sa2, S2) and the time for which the overshoot event lasts. However, this circuit does not discharge the capacitor Cout before the inductor current reduces to zero, and cannot account for voltage across the path resistance (Vpath) for fast load reduction events.

In an alternative implementation, if bidirectional power transfer is not required, the MOSFET Sa1 can be replaced by a diode.

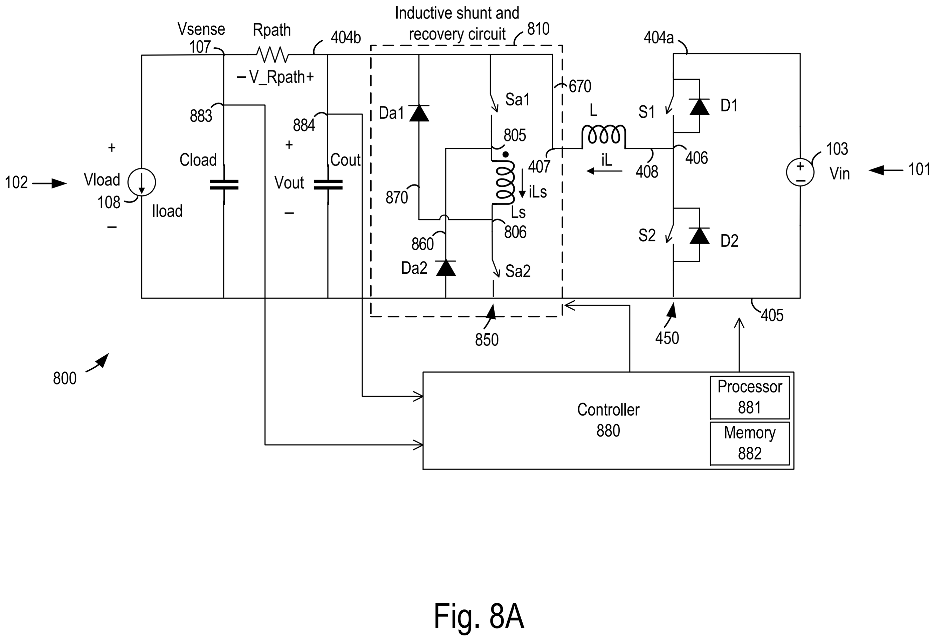

In FIGs. 4, 5, 6A and 7, a controller such as depicted in FIG. 8A can be used to monitor Vload and/or Vout and to turn on and off the switches to regulate Vload and/or Vout relative to a target voltage.

FIG. 5 depicts an example augmented buck converter 500 to recycle inductor and capacitor energy during a voltage overshoot, in accordance with various embodiments. Compared to FIG. 4, this example adds a path 504 with a switch Sa3 between the node 407 and the power rail 404a. Sa3 is a third switch in the path 504. Sa1, Sa2 and Sa3 can be considered to be auxiliary switches. The node 407 represent one side (a first side) of L and the node 406 represents an opposing side (a second side) of L.

Additionally, Sa1 is reversed in its drain (d) and source (s) connections, compared to FIG. 4. The switches are n-type MOSFETs in this example, where the anode of the body diode is at the source (s) and the cathode is at the drain (d). Current can only flow from the anode to the cathode in the direction of the triangle symbol of the diode. The triangle points to the cathode. The source and drain of each switch can be identified accordingly.

During normal operation, the switch Sa1 is ON while Sa2 and Sa3 are OFF. When Vload > Vth (an overshoot condition detected by a control circuit as Vsense > Vth), Sa3 and S2 are turned ON while all other switches are turned OFF, connecting the inductor L across the input node to enable a fast transfer of inductor energy back to the input node, in a current path 510. Note that unlike in the buck-boost circuit of FIG. 4, in this circuit, Da1 blocks a current flow to the output node and forces Da3 to conduct. Once the inductor current reduces to zero, Sa3 is turned off and switches Sa1, Sa2, S1, and S2 are operated to transfer energy from Cout to the input node. This circuit therefore limits Vout and Vload by discharging Cout. Note that the switch Sa3 should be rated for the transient current only, since it is not used at other times.

In an alternative implementation, the switch Sa2 could be replaced by a diode and forgo the inductor freewheeling capability described earlier. The switch Sa3 could also be replaced by a diode.

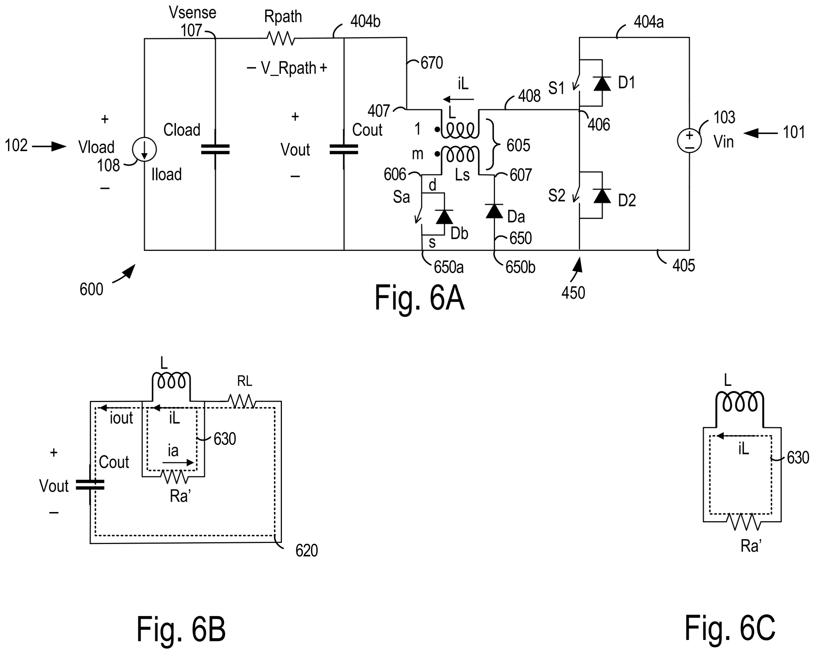

FIG. 6A depicts an example switched-coupled-inductor buck converter 500 to recycle inductor and capacitor energy during a voltage overshoot, in accordance with various embodiments. The inductor L (a first inductor) in the path 408 is mutually coupled to a second, auxiliary or supplemental inductor Ls in a 1: m ratio. The two inductors are magnetically coupled, where one inductor, Ls, has a number of turns that is "m" times greater than the other inductor, L, and m>1. The pair of inductors 605 can form a transformer where the primary coil L has one set of turns and the secondary coil Ls has "m" times more turns, allowing for a voltage transformation based on this ratio. Additionally, the inductors use a dot notation to identify the phase relation. With this notation, if the current entering the dotted terminal of one inductor is increasing, the induced voltage at the dotted terminal of the coupled inductor will be positive.

Ls is coupled at one end 606 to the ground rail via a switch Sa and at an opposing end 607 to the ground rail via a diode Da. Sa also has a body diode Db. Ls is in a series path 650 (a second, switched inductive path) which has both ends coupled to the rail 405, e.g., at nodes 650a and node 650b. The anode of Da is coupled to the ground rail and the cathode of the diode is coupled to the second inductor Ls.

L is in a series path 670 which extends between the rails 404a and 404b.

The node 606 represent one side (a first side) of Ls and the node 607 represents an opposing side (a second side) of Ls.

This circuit eliminates the additional series elements (e.g., Sa1, Sa2 and Sa3) from the main current path and minimizes circuit component count. During normal operation, Sa is OFF, and together with diode Da blocks any current flow in the coupled winding of the buck inductor L. During an overshoot event (Vload > Vth), Sa is turned ON while S1 and S2 are turned OFF. The inductor current now has two parallel paths (see equivalent circuit in FIG. 6B), allowing the inductor current to decay.

FIG. 6B depicts an equivalent circuit of the buck converter 600 of FIG. 6A during a part of a voltage overshoot in which an output current iout continues to charge an output capacitor Cout, in accordance with various embodiments. The switches and diodes are omitted, RL is the resistance of the inductor L, and Ra is the resistance of the auxiliary coil Ls. Initially, part of the inductor current (iout) continues to charge the output capacitor through D2 in a current path 620, while current flowing in the auxiliary winding (ia) in a current path 630 decays.

The following relationships can be observed:

For

$$iL > Vout/Ra';$$

$$iL(t) = IL0 * e^{\wedge}(-t/\tau 1) - (Vout/L) * [1/(1 + RL/Ra')] * t;$$

$$\tau 1 = L/(RL//Ra');$$

and

$$Ra' = Ra/m^{\wedge}2.$$

"RL//Ra'" denotes an effective resistance of Ra' and RL connected in a parallel combination.

FIG. 6C depicts an equivalent circuit of the buck converter 500 of FIG. 5 during a part of a voltage overshoot in which iout no longer charges Cout, in accordance with various embodiments. After the inductor current reduces below Vout/Ra', diode D2 turns off and the current decays exponentially through Sa and Da. Designing with a low Ra' then minimizes the transfer of energy from the inductor to Cout. Moreover, once the inductor current goes to zero, the converter can be operated in a reverse direction like a boost converter, to discharge Cout. The auxiliary coil, switch Sa and diode Da should be rated for the transient duration only.

The following relationships can be observed:

$$iL<Vout/Ra';$$

$$iL(t)=IL0*e^{\wedge}(-t/\tau2);$$

and

$$\tau2=L/Ra'.$$

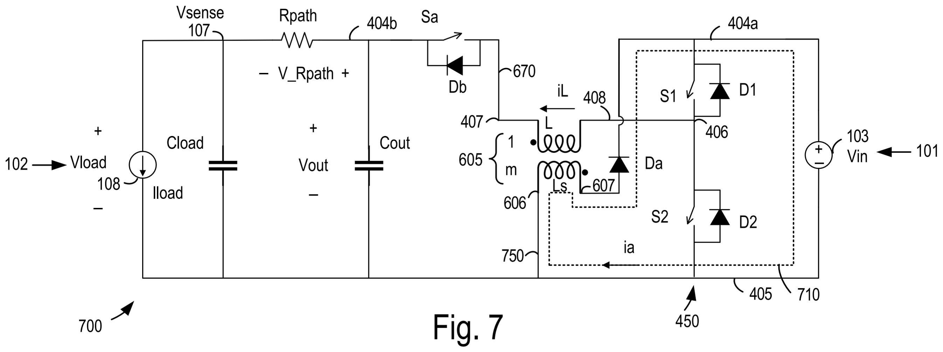

FIG. 7 depicts an example buck-reverse-flyback hybrid converter 700 to recycle inductor and capacitor energy during a voltage overshoot, in accordance with various embodiments. Sa is provided in the top rail 404b. Additionally, the one end 606 of Ls is coupled to the ground rail directly, e.g., in a non-switched path, and the opposing end 607 of Ls is coupled to the first portion 404a of power rail via a diode Da. The dots on the inductors L and Ls indicate the phase relation is opposite to that of FIG. 6A. Ls is in a series path 750 which extends between the rails 404a and 405.

The circuit 700 is a hybrid of a buck converter and a flyback converter (in reverse direction) with the addition of an auxiliary winding Ls on the buck converter inductor L. During normal operation, Sa is turned ON and diode Da blocks current in the auxiliary winding; assuming the turns ratio m<(Vin/Vout), which is easily satisfied. When a voltage overshoot is detected (Vload > Vth) Sa, S1 and S2 are turned off, and the inductor current transfers to the auxiliary winding (flyback action) in a current path 710, which returns the inductor energy back to the input node. The inductor current reduction happens at a fast rate due to a high voltage at the input node. Once current reduces to zero, there are two options for discharging Cout. In a first option, Sa and S2 can be operated like a flyback converter to transfer energy from Cout back to the input node via the auxiliary winding and diode Da. In a second option, Sa is kept ON while S1 and S2 are switched to operate like a boost converter.

FIG. 8A depicts an example buck converter 800 having an inductive shunt and recovery circuit 810, in accordance with various embodiments. In an inductive shunt and recovery circuit 810, a series path 850 includes Sa1, Ls and Sa2, and is coupled at opposing ends to the rails 404b and 405. Ls has opposing ends at nodes 805 and 806. Additionally, a path 860 extends from the node 805 to the rail 405 and includes Da2, and a path 870 extends from the node 806 to the rail 404b and includes Da1.

The node 805 represents one side (a first side) of Ls and the node 806 represents an opposing side (a second side) of Ls.

The one side 805 of the second inductor Ls is coupled to the ground rail via a diode Da2, and the opposing side 806 of the second inductor is coupled to the second portion 404b of the power rail via a diode Da1.

Additionally, a controller 880, e.g., control circuit, is provided to control the circuit 800. A similar controller can be used to control other voltage converters described herein. The controller can include a processor 881 to execute instructions stored in a memory 882. The controller receives, as control inputs, Vload (Vsense) at a node 883 and Vout at a node 884, and in response, provides control signals to the inductive shunt and recovery circuit 810, e.g., to turn on or off Sa1 and Sa2. The controller 880 also provides control signals to turn on or off S1 and S2.

In the circuits of FIGs. 4, 5, 6A and 7, the buck converter inductor energy should be reduced first before the output capacitor can be discharged. Further, all of these require some modification of the main power transfer path. FIG. 8A shows an inductive shunt and recovery circuit 810 added in parallel with the output capacitor (Cout) that does not modify the regular VR circuit. The controller 880 is used to control the shunt circuit for overshoot mitigation.

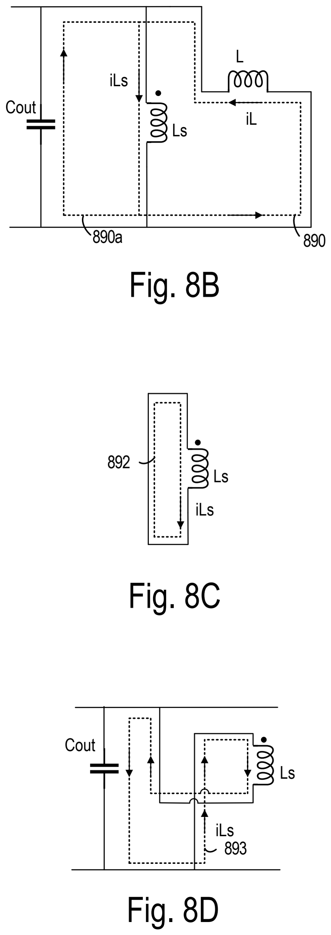

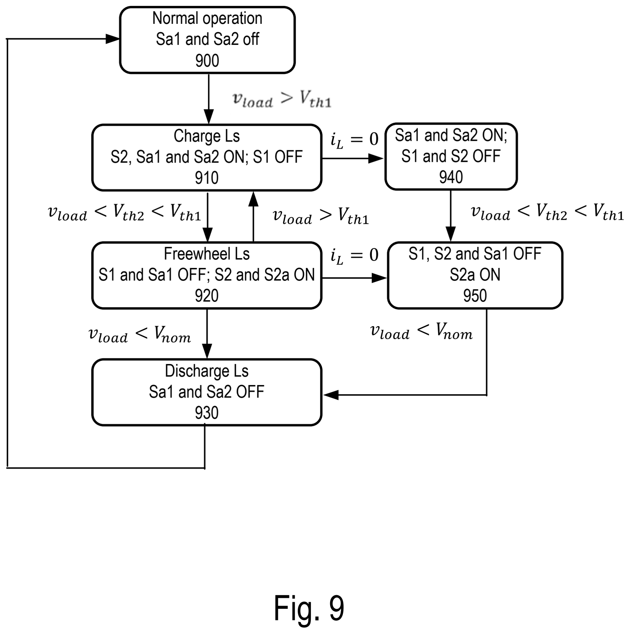

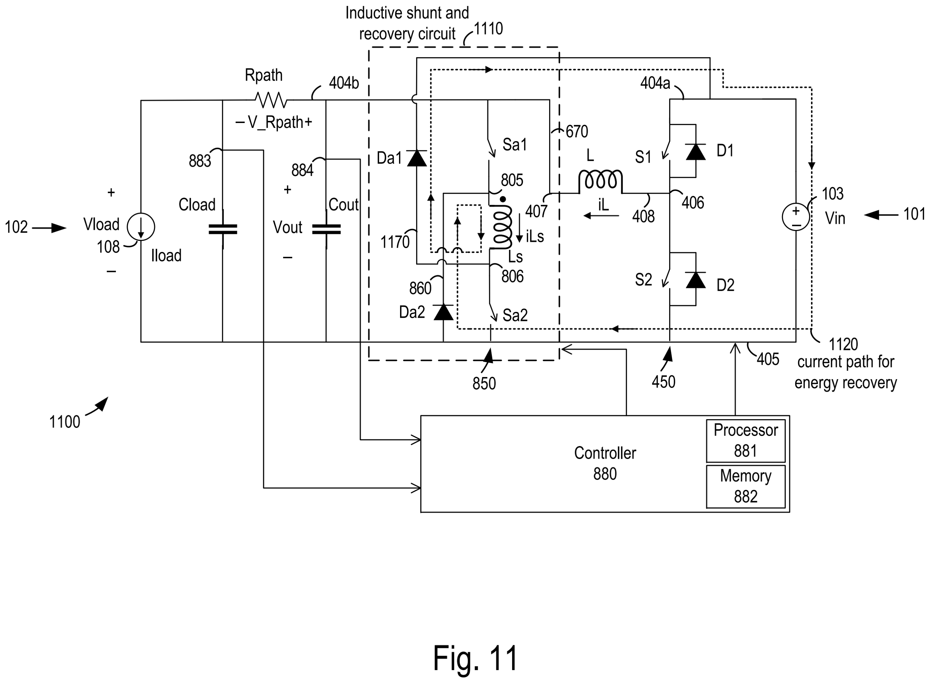

In normal operation, the shunt circuit is inactive. During an overshoot event, switches Sa1 and Sa2 are turned on and the inductor Ls draws energy simultaneously from the buck converter inductor L as well as the output capacitor Cout. When Vload<Vth2<Vth1, where Vth2 is another predefined voltage threshold, the inductor Ls can be freewheeled by keeping S2a ON. Once the voltage reduces below a nominal voltage Vnom (Vload<Vnom<Vth2, for example), switches Sa1 and switches Sa2 are turned off, forcing current to flow into Cout via diodes Da1 and Da2, thereby recovering energy back to the output node.. Once Sa1 and Sa2 are off, normal regulation operation of the buck converter can resume. A state diagram of the operation is shown in FIG. 9 while equivalent circuits during different modes are shown in FIGs. 8B-8D. A variation with energy recycling to the input node is shown in FIG. 11.

FIG. 8B depicts an equivalent circuit of the buck converter 800 of FIG. 8A during a part of a voltage overshoot in which Sa1, Sa2 and S2 are on, in accordance with various embodiments. A current path extends in two parts. A first part 890 includes L and Ls, and a second part 890a includes Ls and Cout. L has a current iL and Ls has a current iLs.

FIG. 8C depicts an equivalent circuit of the buck converter 800 of FIG. 8A during a part of a voltage overshoot in which Sa2 is on and Da2 conducts, in accordance with various embodiments. A current path 892 extends in a circuit which includes Ls. Ls has a current iLs.

FIG. 8D depicts an equivalent circuit of the buck converter 800 of FIG. 8A during a part of a voltage overshoot in which Da1 and Da2 conduct, in accordance with various embodiments. A current path 893 extends in a circuit which includes Cout and Ls.

FIG. 9 depicts a state diagram for controlling the buck converter 800 of FIG. 8A, in accordance with various embodiments. The state diagram may be implemented by the controller 880, for example, operating as a state machine.

State 900 represents normal operation, with no voltage overshoot detected. In this case, Sa1 and Sa2 are off. Vin is provided to the circuit 800 via L.

State 910 follows state 900 when Vload>Vth1. In state 910, Ls is charged, S2, Sa1 and Sa2 are on, and S1 is off. When Sa1 and Sa2 are turned on, current can flow in the series path 850 through Ls as iLs.

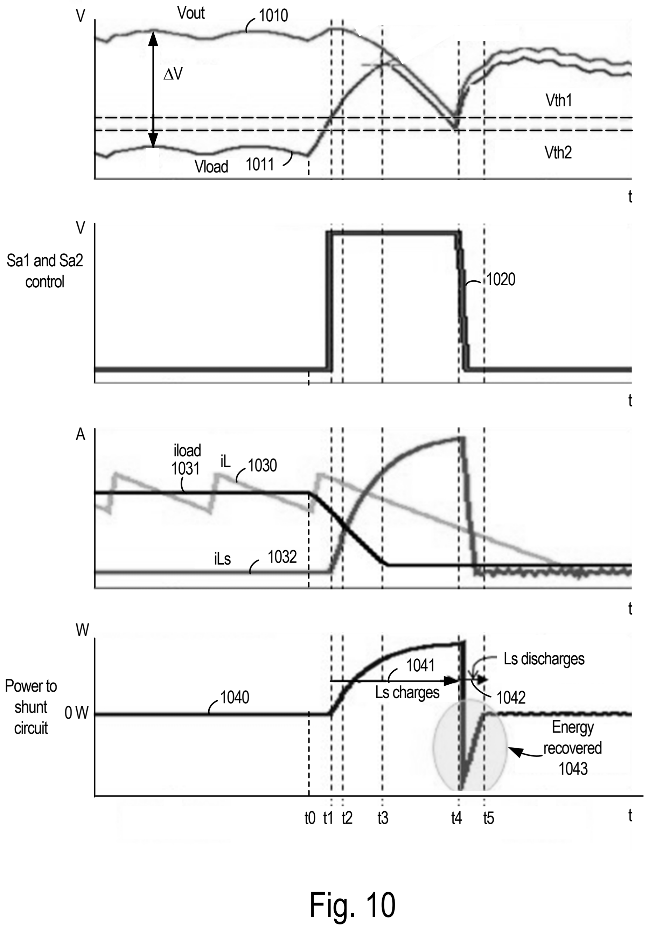

State 920 or state 940 can follow state 910. State 920 follows if Vload<Vth2<Vth1 (FIG. 10). State 920 includes freewheeling Ls with S1 and Sa1 off, and S2 and S2a on. State 940 follows if iL=0. In state 940, Sa1 and Sa2 are on, and S1 and S2 are off.

State 930 or state 950 can follow state 920. State 930 follows if Vload<Vnom. State 930 includes discharging Ls, with Sa1 and Sa2 off. State 950 follows if iL=0. In state 950, S1, S2 and Sa1 are off, and S2a is on. State 950 also follows state 940 when Vload<Vth2<Vth1. State 930 follows state 950 when Vload<Vnom. State 910 can follow state 920 when Vload>Vth1.

FIG. 10 depicts plots consistent with a voltage overshoot in the buck converter 800 of FIG. 8A, in accordance with various embodiments. The different plots are on common timelines. Plots 1010 and 1011 depict Vout and Vload, respectively. ΔV denotes Vout-Vload. First and second voltage threshold Vth1 and Vth2, respectively, are also depicted.

A plot 1020 represents a control signal for the control gates of Sa1 and Sa2, in terms of voltage versus time. The switches can be n-type MOSFET which turn on when their control gate voltage is high.

Plots 1030, 1031 and 1032 depict iL, iload and iLs, respectively, in terms of Amperes (A) versus time.

Plot 1040 depicts power to the shunt circuit, is terms of Watts (W) versus time.

FIG. 10 shows simulated waveforms for the overshoot operation. The simulation shows charging and discharging of the inductor Ls when the voltage crosses Vth1 and Vth2, respectively, but does not implement a freewheeling operation for the inductor Ls.. When the load current reduces at t0-t3, such as due to a decreased current consumption of a processor, Vload increases and crosses above Vth1 (at t1). S1 is turned off and S2 is turned on, causing iL to decrease, while Sa1 and Sa2 are turned on, causing iLs to increase.

At t2, iLs > iL-iload and Cout starts discharging. After t2, although Vout starts reducing, Vload keeps increasing due to the reduction in voltage drop across the path resistance (Vpath=Rpath*iload) as iload continues to reduce. At t3, iload stops reducing as does Vpath. After t3, the energy remaining in the buck inductor and Cout continues to transfer to the inductor Ls. At t4, Vload crosses below Vth2, causing switches Sa1 and Sa2 to be turned off, and causing diodes Da1 and Da2 to conduct and transfer energy from Ls back to the output capacitor Cout. The energy recovered from Ls is the negative area under the power waveform (plot 1040). The amount of energy recovered depends on the diode characteristics (forward voltage drop and series resistance) and the nominal output voltage. The circuit 800 reduces the voltage overshoot by a significant amount compared to a load voltage without any voltage overshoot mitigation.

For the plot 1040, the arrow 1041 denotes the time period in which Ls charges, the arrow 1042 denotes the time period in which Ls discharges, and the circled area 1043 denotes energy recovery as the power of the shunt circuit goes negative.

FIG. 11 depicts another example buck converter 1100 having an inductive shunt and recovery circuit 1110, in accordance with various embodiments. FIG. 11 differs from FIG. 8A in that, instead of path 870 extending from the node 806 to the second portion 404b of the power rail, a path 1170 extends from the node 806 to the first portion 404a of the power rail, in the inductive shunt and recovery circuit 1110.

This circuit 1100 combines the shunt circuit with the buck converter more tightly. It recycles energy from the buck inductor L and output Cout simultaneously back to the input node of the buck converter, in a current path 1120. In this variant, the inductor Ls can be sized smaller than in FIG. 8A since the energy transfer can be done over multiple cycles by switching Sa1 and Sa2 On-Off at a high frequency for the duration of the overshoot.

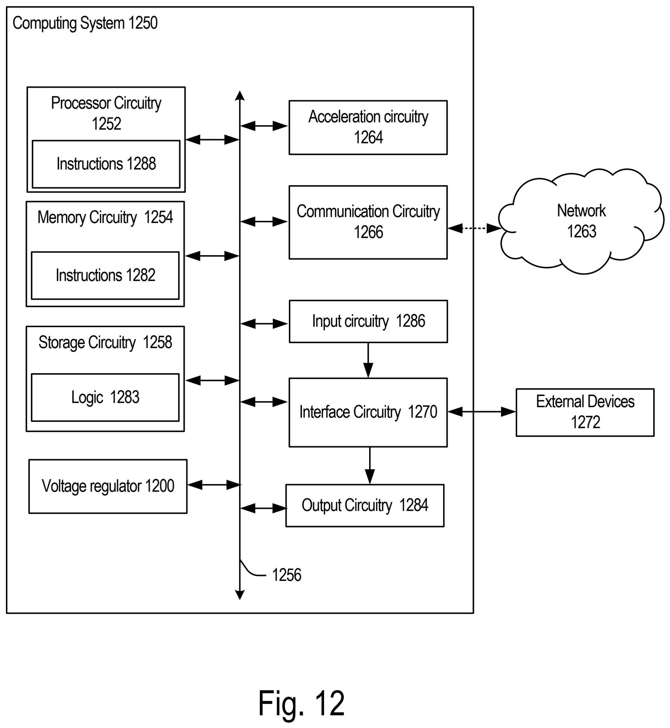

FIG. 12 illustrates an example of components that may be present in a computing system 1250 for implementing the techniques (e.g., operations, processes, methods, and methodologies) described herein.

The computing system 1250 may include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 1250, or as components otherwise incorporated within a chassis of a larger system. In an example implementation, the voltage regulator 1200 represents one or more of the voltage converters discussed herein, and the other circuitry can represent one or more load die which are powered by the a voltage converter. In one approach, all or part of the computing system 1250 is provided in a SoP, System in Package (SiP) or a System on Chip (SoC).

The voltage regulator can provide a voltage Vout to one or more of the components of the computing system 1250. The memory circuitry 1254 may store instructions and the processor circuitry 1252 may execute the instructions to perform the functions described herein.

The system 1250 includes processor circuitry in the form of one or more processors 1252. The processor circuitry 1252 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 1252 may include one or more hardware accelerators (e.g., same or similar to acceleration circuitry 1264), which may be microprocessors, programmable processing devices (e.g., FPGA, ASIC, etc.), or the like. The one or more accelerators may include, for example, computer vision and/or deep learning accelerators. In some implementations, the processor circuitry 1252 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor circuitry 1252 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low-voltage processor, an embedded processor, or any other known processing elements, or any suitable combination thereof. The processors (or cores) 1252 may be coupled with or may include memory/storage and may be configured to execute instructions stored in the memory/storage to enable various applications or operating systems to run on the platform 1250. The processors (or cores) 1252 is configured to operate application software to provide a specific service to a user of the platform 1250. In some embodiments, the processor(s) 1252 may be a special-purpose processor(s)/controller(s) configured (or configurable) to operate according to the various embodiments herein.

As examples, the processor(s) 1252 may include an Intel® Architecture Core™ based processor such as an i3, an i5, an i7, an i9 based processor; an Intel® microcontroller-based processor such as a Quark™, an Atom™, or other MCU-based processor; Pentium® processor(s), Xeon® processor(s), or another such processor available from Intel® Corporation, Santa Clara, California. However, any number other processors may be used, such as one or more of Advanced Micro Devices (AMD) Zen® Architecture such as Ryzen® or EPYC® processor(s), Accelerated Processing Units (APUs), MxGPUs, Epyc® processor(s), or the like; A5-A12 and/or S1-S4 processor(s) from Apple® Inc., Snapdragon™ or Centriq™ processor(s) from Qualcomm® Technologies, Inc., Texas Instruments, Inc.® Open Multimedia Applications Platform (OMAP)™ processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2® provided by Cavium™, Inc.; or the like. In some implementations, the processor(s) 1252 may be a part of a system on a chip (SoC), System-in-Package (SiP), a multi-chip package (MCP), and/or the like, in which the processor(s) 1252 and other components are formed into a single integrated circuit, or a single package, such as the Edison™ or Galileo™ SoC boards from Intel® Corporation. Other examples of the processor(s) 1252 are mentioned elsewhere in the present disclosure.

The system 1250 may include or be coupled to acceleration circuitry 1264, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 1264 may comprise logic blocks or logic fabric and other interconnected resources that may be programmed (configured) to perform various functions, such as the procedures, methods, functions, etc. of the various embodiments discussed herein. In such implementations, the acceleration circuitry 1264 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 1252 and/or acceleration circuitry 1264 may include hardware elements specifically tailored for machine learning and/or artificial intelligence (AI) functionality. In these implementations, the processor circuitry 1252 and/or acceleration circuitry 1264 may be, or may include, an AI engine chip that can run many different kinds of AI instruction sets once loaded with the appropriate weightings and training code. Additionally or alternatively, the processor circuitry 1252 and/or acceleration circuitry 1264 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google® Inc., Real AI Processors (RAPs™) provided by AlphaICs®, Nervana™ Neural Network Processors (NNPs) provided by Intel® Corp., Intel® Movidius™ Myriad™ X Vision Processing Unit (VPU), NVIDIA® PX™ based GPUs, the NM500 chip provided by General Vision®, Hardware 3 provided by Tesla®, Inc., an Epiphany™ based processor provided by Adapteva®, or the like. In some embodiments, the processor circuitry 1252 and/or acceleration circuitry 1264 and/or hardware accelerator circuitry may be implemented as AI accelerating co-processor(s), such as the Hexagon 685 DSP provided by Qualcomm®, the PowerVR 2NX Neural Net Accelerator (NNA) provided by Imagination Technologies Limited®, the Neural Engine core within the Apple® A11 or A12 Bionic SoC, the Neural Processing Unit (NPU) within the HiSilicon Kirin provided by Huawei®, and/or the like. In some hardware-based implementations, individual subsystems of system 1250 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 1250 also includes system memory 1254. Any number of memory devices may be used to provide for a given amount of system memory. As examples, the memory 1254 may be, or include, volatile memory such as random access memory (RAM), static RAM (SRAM), dynamic RAM (DRAM), synchronous DRAM (SDRAM), RAMBUS® Dynamic Random Access Memory (RDRAM®), and/or any other desired type of volatile memory device. Additionally or alternatively, the memory 1254 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 1254 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 1258 provides persistent storage of information such as data, applications, operating systems and so forth. In an example, the storage 1258 may be implemented via a solid-state disk drive (SSDD) and/or high-speed electrically erasable memory (commonly referred to as "flash memory"). Other devices that may be used for the storage 1258 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 1254 and/or storage circuitry 1258 may also incorporate three-dimensional (3D) cross-point (XPOINT) memories from Intel® and Micron®.

The memory circuitry 1254 and/or storage circuitry 1258 is/are configured to store computational logic 1283 in the form of software, firmware, microcode, or hardware-level instructions to implement the techniques described herein. The computational logic 1283 may be employed to store working copies and/or permanent copies of programming instructions, or data to create the programming instructions, for the operation of various components of system 1250 (e.g., drivers, libraries, application programming interfaces (APIs), etc.), an operating system of system 1250, one or more applications, and/or for carrying out the embodiments discussed herein. The computational logic 1283 may be stored or loaded into memory circuitry 1254 as instructions 1282, or data to create the instructions 1282, which are then accessed for execution by the processor circuitry 1252 to carry out the functions described herein. The processor circuitry 1252 and/or the acceleration circuitry 1264 accesses the memory circuitry 1254 and/or the storage circuitry 1258 over the interconnect (IX) 1256. The instructions 1282 direct the processor circuitry 1252 to perform a specific sequence or flow of actions, for example, as described with respect to flowchart(s) and block diagram(s) of operations and functionality depicted previously. The various elements may be implemented by assembler instructions supported by processor circuitry 1252 or high-level languages that may be compiled into instructions 1288, or data to create the instructions 1288, to be executed by the processor circuitry 1252. The permanent copy of the programming instructions may be placed into persistent storage devices of storage circuitry 1258 in the factory or in the field through, for example, a distribution medium (not shown), through a communication interface (e.g., from a distribution server (not shown)), over-the-air (OTA), or any combination thereof.

The IX 1256 couples the processor 1252 to communication circuitry 1266 for communications with other devices, such as a remote server (not shown) and the like. The communication circuitry 1266 is a hardware element, or collection of hardware elements, used to communicate over one or more networks 1263 and/or with other devices. In one example, communication circuitry 1266 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth® and/or Bluetooth® low energy (BLE), ZigBee®, LoRaWAN™ (Long Range Wide Area Network), a cellular protocol such as 3GPP LTE and/or Fifth Generation (5G)/New Radio (NR), and/or the like. Additionally or alternatively, communication circuitry 1266 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 1256 also couples the processor 1252 to interface circuitry 1270 that is used to connect system 1250 with one or more external devices 1272. The external devices 1272 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 1250, which are referred to as input circuitry 1286 and output circuitry 1284. The input circuitry 1286 and output circuitry 1284 include one or more user interfaces designed to enable user interaction with the platform 1250 and/or peripheral component interfaces designed to enable peripheral component interaction with the platform 1250. Input circuitry 1286 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 1284 may be included to show information or otherwise convey information, such as sensor readings, actuator position(s), or other like information. Data and/or graphics may be displayed on one or more user interface components of the output circuitry 1284. Output circuitry 1284 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 1250. The output circuitry 1284 may also include speakers and/or other audio emitting devices, printer(s), and/or the like. Additionally or alternatively, sensor(s) may be used as the input circuitry 1284 (e.g., an image capture device, motion capture device, or the like) and one or more actuators may be used as the output device circuitry 1284 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 1250 may communicate over the IX 1256. The IX 1256 may include any number of technologies, including ISA, extended ISA, I2C, SPI, point-to-point interfaces, power management bus (PMBus), PCI, PCIe, PCIx, Intel® UPI, Intel® Accelerator Link, Intel® CXL, CAPI, OpenCAPI, Intel® QPI, UPI, Intel® OPA IX, RapidIO™ system IXs, CCIX, Gen-Z Consortium IXs, a HyperTransport interconnect, NVLink provided by NVIDIA®, a Time-Trigger Protocol (TTP) system, a FlexRay system, PROFIBUS, and/or any number of other IX technologies. The IX 1256 may be a proprietary bus, for example, used in a SoC based system.

The number, capability, and/or capacity of the elements of system 1250 may vary, depending on whether computing system 1250 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 1250 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible, non-transitory machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

Some non-limiting examples of various embodiments are presented below.

Example 1 includes an apparatus, comprising: a power rail; a ground rail; a first series path, coupled to the power rail and the ground rail, comprising a high-side switch and a low-side switch; a second series path, coupled to the power rail and the ground rail, comprising a first switch and a second switch; an inductor coupled at one side to a node between the high-side and low-side switches and at an opposing side to a node between the first and second switches; and a third switch which is coupled at one side to the node between the first and second switches and at an opposite side to the power rail.

Example 2 includes the apparatus of Example 1, wherein a source of the first switch is coupled to the power rail and a source of the second switch is coupled to the ground rail.

Example 3 includes the apparatus of Example 1 or 2, wherein a drain of the third switch is coupled to the power rail and a source of the third switch is coupled to the node between the first and second switches

Example 4 includes the apparatus of any one of Examples 1-3, further comprising a control circuit coupled to the first, second and third switches and to a sense node of the power rail.

Example 5 includes the apparatus of Example 4, wherein the control circuit is configured to make a determination that a voltage of the sense node exceeds a threshold and to control the first, second and third switches based on the determination.

Example 6 includes the apparatus of Example 5, wherein, based on the determination, the control circuit is configured to turn on the third and low-side switches and turn off the first, second and high-side switches.

Example 7 includes the apparatus of Example 5 or 6, wherein, based on the voltage of the sense node no longer exceeding the threshold, the control circuit is configured to turn on the first switch and turn off the second and third switches.

Example 8 includes the apparatus of any one of Examples 1-7, further comprising a load coupled between the power rail and the ground rail, wherein the load is in a package and the first and second series paths and the third switch are on a printed circuit board which is external to the package.

Example 9 includes an apparatus, comprising: a power rail including first and second portions; a ground rail; a first series path, coupled to the first portion of the power rail and the ground rail, comprising a high-side switch and a low-side switch; a first inductive path including a first inductor coupled at one side to the second portion of the power rail and at an opposing side to a node between the high-side and low-side switches; and a second inductive path including a second inductor coupled at one side to the ground rail and at an opposing side to the power rail or the ground rail.

Example 10 includes the apparatus of Example 9, wherein: the one side of the second inductor is coupled to the ground rail via a switch; the opposing side of the second inductor is coupled to the ground rail via a diode; and the first and second inductors form a transformer where the second inductor has m turns for every one turn of the first inductor.

Example 11 includes the apparatus of Example 9, further comprising a series switch in the second portion of the power rail, wherein: the one side of the first inductor is coupled to the series switch; the opposing side of the second inductor is coupled to the first portion of the power rail via a diode; and the first and second inductors form a transformer where the second inductor has m turns for every one turn of the first inductor.

Example 12 includes the apparatus of Example 9, wherein, in a series path: the one side of the second inductor is coupled to the second portion of the power rail via a power rail-side switch; and the opposing side of the second inductor is coupled to the ground rail via a ground rail-side switch.

Example 13 includes the apparatus of Example 12, wherein: the one side of the second inductor is coupled to the ground rail via a diode; and the opposing side of the second inductor is coupled to the second portion of the power rail via a diode.

Example 14 includes the apparatus of Example 12, wherein: the one side of the second inductor is coupled to the ground rail via a diode; and the opposing side of the second inductor is coupled to the first portion of the power rail via a diode.

Example 15 includes a system, comprising: a voltage converter comprising a power rail and a ground rail; and a control circuit coupled to the voltage converter, wherein: the voltage converter comprises a first inductive path comprising a first inductor, and a second inductive path comprising a second inductor coupled on one side to the power rail by a power rail-side switch and on an opposing side to the ground rail by a ground rail-side switch; and the control circuit is configured to make a determination that an overvoltage condition exists at the voltage converter, and to turn on the power rail-side switch and the ground rail-side switch based on the determination that the overvoltage condition exists.

Example 16 includes the system of Example 15, wherein the control circuit is configured to make a determination that the overvoltage condition no longer exists at the voltage converter based on a sensed voltage of the voltage converter falling below a threshold voltage, and to turn off the power rail-side switch and keep on the ground rail-side switch based on the sensed voltage of the voltage converter falling below the threshold voltage.

Example 17 includes the system of Example 16, wherein the control circuit is configured to make a determination that the sensed voltage of the voltage converter falls below a nominal voltage which is less than the threshold voltage, and to keep off the power rail-side switch and turn off the ground rail-side switch based on the sensed voltage of the voltage converter falling below the nominal voltage.

Example 18 includes the system of Example 16 or 17, wherein: the control circuit is configured to operate in a normal state based on the overvoltage condition not being detected, and based on the overvoltage condition being detected, to operate in a sequence of: a charge state in which the second inductor is charged, followed by a freewheel state in which the second inductor is freewheeled, followed by a discharge state in which the second inductor is discharged; and the turn on of the power rail-side switch and the ground rail-side switch is part of the charge state.

Example 19 includes the system of any one of Examples 15-18, wherein: the voltage converter further comprises a series path, coupled to the power rail and the ground rail, comprising a high-side switch and a low-side switch; and one side of the first inductor is coupled to the power rail and an opposing side of the first inductor is coupled to a node which is between the high-side switch and the low-side switch.

Example 20 includes the system of any one of Examples 15-19, wherein: the one side of the second inductor is coupled to the ground rail via a diode; and the opposing side of the second inductor is coupled to the power rail via a diode.

Example 21 includes a method, comprising: supplying an input voltage to an input node of a voltage converter; monitoring an output voltage of the voltage converter to detect an overvoltage condition; in response to the detecting of the overvoltage condition, controlling one or more switches in the voltage converter to recycle current from an inductor of the voltage converter to the input node.

Example 22 includes an apparatus, comprising means to perform the method of Example 21.

Example 23 includes a machine-readable storage including machine-readable instructions which, when executed, cause a computer to implement the method of Example 21.

Example 24 includes a computer program comprising instructions which, when executed by a computer, cause the computer to carry out the method of Example 21.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

**Claims**

1. An apparatus, comprising:

   a power rail;
   a ground rail;
   a first series path, coupled to the power rail and the ground rail, comprising a high-side switch and a low-side switch;
   a second series path, coupled to the power rail and the ground rail, comprising a first switch and a second switch;
   an inductor coupled at one side to a node between the high-side and low-side switches and at an opposing side to a node between the first and second switches; and
   a third switch which is coupled at one side to the node between the first and second switches and at an opposite side to the power rail.

2. The apparatus of claim 1, wherein a source of the first switch is coupled to the power rail and a source of the second switch is coupled to the ground rail.

3. The apparatus of claim 1 or 2, wherein a drain of the third switch is coupled to the power rail and a source of the third switch is coupled to the node between the first and second switches.

4. The apparatus of any one of claims 1-3, further comprising a control circuit coupled to the first, second and third switches and to a sense node of the power rail.

5. The apparatus of claim 4, wherein the control circuit is configured to make a determination that a voltage of the sense node exceeds a threshold and to control the first, second and third switches based on the determination.

6. The apparatus of claim 5, wherein, based on the determination, the control circuit is configured to turn on the third and low-side switches and turn off the first, second and high-side switches.

7. The apparatus of claim 5 or 6, wherein, based on the voltage of the sense node no longer exceeding the threshold, the control circuit is configured to turn on the first switch and turn off the second and third switches.

8. The apparatus of any one of claims 1-7, further comprising a load coupled between the power rail and the ground rail, wherein the load is in a package and the first and second series paths and the third switch are on a printed circuit board which is external to the package.

9. A method, comprising:

supplying an input voltage to an input node of a voltage converter;

monitoring an output voltage of the voltage converter to detect an overvoltage condition; and

in response to the detecting of the overvoltage condition, controlling one or more switches in the voltage converter to recycle current from an inductor of the voltage converter to the input node.

10. The method of claim 9, wherein the voltage converter comprises:

a power rail;

a ground rail;

a first series path, coupled to the power rail and the ground rail, comprising a high-side switch and a low-side switch;

a second series path, coupled to the power rail and the ground rail, comprising a first switch and a second switch;

an inductor coupled at one side to a node between the high-side and low-side switches and at an opposing side to a node between the first and second switches; and

a third switch which is coupled at one side to the node between the first and second switches and at an opposite side to the power rail.

11. The method of claim 10, further comprising:

determining that a voltage of a sense node of the power rail exceeds a threshold; and

controlling the first, second and third switches based on the determination.

12. The method of claim 11, further comprising:

based on the determining, turning on the third and low-side switches and turning off the first, second and high-side switches.

13. The method of claim 11, further comprising:

based on the voltage of the sense node no longer exceeding the threshold, turning on the first switch and turning off the second and third switches.

14. A machine-readable storage including machine-readable instructions which, when executed, cause a computer to implement the method of any one of claims 9-13.

## Fig. 1

## Fig. 2

EP 4 769 922 A1

Fig. 3

Fig. 4

Fig. 5

EP 4 769 922 A1

Fig. 6A

Fig. 6B

Fig. 6C

Fig. 7

Fig. 8A

Fig. 8B

Fig. 8C

Fig. 8D

Fig. 9

Fig. 10

Fig. 11

Fig. 12

<table>
<tr><td colspan="2">Europäisches<br>Patentamt<br>European<br>Patent Office<br>Office européen<br>des brevets</td><td align="center">**EUROPEAN SEARCH REPORT**</td><td>**Application Number**<br><br>**EP 25 21 5522**</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 213 384 A1 (SAMSUNG ELECTRONICS CO LTD [KR]) 19 July 2023 (2023-07-19)<br>* paragraph [0043] *<br>* paragraph [0046] *<br>* paragraph [0049] *<br>* figures 1-5 *<br>----- | 1-14 | INV.<br>H02M1/32<br>H02M3/158<br>H02M1/34 |
| A | HWU K. I. ET AL: "Non-isolated dual half-bridge ZVS/ZCS high step-down converter with zero DC bias current coupled inductor and active clamp",<br>2016 IEEE INTERNATIONAL CONFERENCE ON SUSTAINABLE ENERGY TECHNOLOGIES (ICSET) IEEE,<br>14 November 2016 (2016-11-14), pages 120-125, XP033041070,<br>DOI: 10.1109/ICSET.2016.7811767<br>[retrieved on 2017-01-09]<br>* abstract; figures 1-3 *<br>----- | 1-14 | |
| A | PRADEEP S. SHENOY ET AL: "Beyond time-optimality: Energy-based control of augmented buck converters for near ideal load transient response",<br>APPLIED POWER ELECTRONICS CONFERENCE AND EXPOSITION (APEC), 2011 TWENTY-SIXTH ANNUAL IEEE IEEE,<br>6 March 2011 (2011-03-06), pages 916-922, XP032013988,<br>DOI: 10.1109/APEC.2011.5744704<br>ISBN: 9781424480845<br>* figures 1, 2 *<br>----- | 1-14 | TECHNICAL FIELDS SEARCHED (IPC)<br><br>H02M |

The present search report has been drawn up for all claims

| Place of search | Date of completion of the search | Examiner |
|---|---|---|
| The Hague | 22 April 2026 | Madouroglou, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 5522

This annex lists the patent family members relating to the patent documents cited in  the above-mentioned European search report.
The members are as contained in the European Patent Office EDP file on
The European Patent Office is in no way liable for these particulars which are merely given for the purpose of information.

22-04-2026

| Patent document cited in search report | Publication date | Patent family member(s) | Publication date |
|---|---|---|---|
| EP 4213384 A1 | 19-07-2023 | EP 4213384 A1 | 19-07-2023 |
| | | KR 20220050387 A | 25-04-2022 |
| | | US 2023253874 A1 | 10-08-2023 |
| | | WO 2022080830 A1 | 21-04-2022 |

EPO FORM P0459

For more details about this annex : see Official Journal of the European Patent Office, No. 12/82